# EUROPÄISCHE PATENTSCHRIFT

(11) **EP 3 090 623 B1**
(45) Veröffentlichungstag und Bekanntmachung des Hinweises auf die Patenterteilung: **18.04.2018**
(21) Anmeldenummer: 16155131.2
(22) Anmeldetag: 11.02.2016
(51) Int. Cl.: A01F 29/09, A01F 29/10, A01D 43/08

(54) **SELBSTFAHRENDER FELDHÄCKSLER**
SELF-PROPELLED CHAFF CUTTER
RAMASSEUSE-HACHEUSE AUTOMOBILE

(30) Priorität: 04.05.2015 DE 102015106898
(43) Veröffentlichungstag der Anmeldung: 09.11.2016
(73) Patentinhaber: CLAAS Saulgau GmbH, 88348 Bad Saulgau (DE)
(72) Erfinder: Schiewer, Stefan, 48231 Warendorf (DE); Winkler, Martin, 89077 Ulm (DE); Brockhan-Lüdemann, Steffen, 27386 Kirchwalsede (DE); Lehmann, Martin, 78357 Mühlingen (DE)

(56) Entgegenhaltungen:
- EP-A1- 0 300 299
- EP-A1- 1 452 088
- EP-A1- 2 363 016
- DE-A1-102012 220 339
- DE-C- 860 873

## Beschreibung

Die Erfindung betrifft einen selbstfahrenden Feldhäcksler mit einem zumindest teilweise im Bereich zwischen Antriebsrädern angeordneten Häckselaggregat, das ein Trommelgehäuse und eine in diesem gelagerte Häckseltrommel aufweist, und mit einem dem Häckselaggregat vorgeschalteten Einzugsgehäuse, welches jeweils paarweise angeordnete Einzugswalzen und Vorpresswalzen aufnimmt und an welches ein Erntevorsatz kuppelbar ist, wobei das Einzugsgehäuse für Wartungs- oder Reparaturarbeiten gegenüber dem Trommelgehäuse um eine im Wesentlichen vertikale Schwenkachse in zumindest eine Öffnungsstellung, in der das Innere des Trommelgehäuses zugänglich ist, verschwenkbar ist, wobei an einer ersten vertikalen Seitenwand des Trommelgehäuses oder einem dieser benachbarten Gestellteil ein die Schwenkachse bildendes mit einer ersten Seitenwand des Einzugsgehäuses verbundenes Scharnier befestigt ist und wobei in einer Schließposition an einer zweiten vertikalen Seitenwand oder einem dieser benachbarten Gestellteil eine zweite Seitenwand des Einzugsgehäuses festlegbar ist.

Von einem selbstfahrenden Feldhäcksler wird über einen Erntevorsatz Mais oder Grünfutter aufgenommen und über paarweise gegenläufig rotierende Einzugswalzen eingezogen, die dieses Erntegut dann ebenfalls paarweise angetriebenen Vorpresswalzen zuführen. Die Einzugswalzen und die Vorpresswalzen sind in einem Einzugsgehäuse angeordnet, an dessen vorderem Ende der Erntevorsatz aufgenommen wird und das folglich eine Eintrittsöffnung aufweist.

Anschließend gelangt das Erntegut in ein Häckselaggregat, das eine mit Messern bestückte, in einem Trommelgehäuse angeordnete Häckseltrommel aufweist, die mit einer in dem Trommelgehäuse vorgesehenen Gegenschneide zusammenwirkt. Das Einzugsgehäuse ist mit dem Trommelgehäuse verbunden, so dass das Erntegut ungehindert von dem Einzugsgehäuse in das Trommelgehäuse gelangen kann. An das Häckselaggregat schließen sich Nachzerkleinerungseinrichtungen an, von denen aus das Erntegut in ein Auswurfgebläse gelangt, welches in einen Auswurfkanal mündet. Dieser Auswurfkanal ist mit einem als Überladeeinrichtung dienenden Auswurfkrümmer verbunden, über den das Erntegut einem parallel zum Feldhäcksler fahrenden Sammelbehälter zugeführt wird.

Ein selbstfahrender Feldhäcksler der im Oberbegriff des Patentanspruchs 1 angegebenen Gattung ist aus der EP 0 300 299 A1 bekannt. Bei diesem weist das Einzugsgehäuse einen oberen und einen unteren Querbalken auf, die über eine aufrechte Gelenkachse verschwenkbar an Rahmenteilen eines Trommelgehäuses geführt sind. Für Wartungsarbeiten, bei denen ein Zugang zur Gegenschneide des Häckselaggregats ermöglicht werden soll, kann folglich das Einzugsgehäuse einseitig von dem Trommelgehäuse getrennt und um diese Gelenkachse weggeschwenkt werden.

Es ist Aufgabe der vorliegenden Erfindung, Wartungs- und Reparaturarbeiten am Häckselaggregat zu vereinfachen und die Verletzungsgefahr bei derartigen Arbeiten zu verringern.

Diese Aufgabe wird, ausgehend vom jeweiligen Oberbegriff des Patentanspruchs 1 in Verbindung mit dessen kennzeichnenden Merkmalen gelöst. Die vom Patentanspruch 1 abhängigen Patentansprüche beinhalten erfindungsgemäße Weiterbildungen dieser Lösung.

Danach soll im Bereich der zweiten Seitenwände des Einzugsgehäuses und des Trommelgehäuses zumindest ein Kuppelelement zumindest eines Antriebselements vorgesehen sein, wobei am Scharnier eine Rast- oder Verriegelungseinrichtung vorgesehen ist, über die das Einzugsgehäuse in mindestens einer zwischen der Schließposition und einer maximalen Öffnungsposition liegenden Zwischenposition gehalten wird. Der Vorteil dieser Lösung besteht darin, dass das Einzugsgehäuse zunächst nur um einen relativ kleinen Winkel in Richtung seiner Öffnungsposition, also in eine Zwischenposition, verschwenkt werden kann und in dieser mittels der Rast- oder Verriegelungseinrichtung gehalten wird.

Dadurch ist die Zugänglichkeit der hinter dem, in Fahrtrichtung gesehen, linken Antriebsrad verbessert, und das Abkuppeln des zumindest einen Kuppelelements, das eine Gelenkwelle mit dem Antriebsmotor des Vorsatzgetriebes und einem Zwischengetriebe verbindet, wird vereinfacht. Die Rast- oder Verriegelungseinrichtung verhindert, dass sich das Einzugsgehäuse unbeabsichtigt in seine Schließposition bewegt.

Demgegenüber soll das Einzugsgehäuse nach der Druckschrift EP 0 300 299 A1 zur Durchführung von Reparatur- und Wartungsarbeiten am Häckselaggregat nur in eine Position verschwenkt werden, in der der Zugang in das Innere des Trommelgehäuses maximal geöffnet ist. Außerdem besteht dabei auch keine Möglichkeit, das Einzugsgehäuse in dieser Öffnungsstellung oder in einer anderen Position zu verrasten oder zu verriegeln.

In Weiterbildung der Erfindung soll das Einzugsgehäuse in seiner Zwischenposition um einen Winkel in einem Bereich zwischen 10°bis 20° aus der der Schließposition heraus verschwenkt sein. Dieser Öffnungswinkel ist optimal, um einen ausreichenden Raum für die die Reparatur- und Wartungsarbeiten durchführende Person zur Verfügung zu stellen und um die Gelenkwelle vom Antrieb abzukuppeln sowie am Ende der Arbeiten wieder anzukuppeln.

Weiterhin kann die Rasteinrichtung ein durch eine Feder vorgespanntes Rastmittel aufweisen, das mit einem Rastgebirge zusammenwirkt. Das federbeaufschlagte Rastmittel kann dabei längsverschiebbar oder radial verlagerbar ausgebildet sein.

Außerdem besteht eine bevorzugte Ausführungsform darin, dass das Scharnier einen im Wesentlichen vertikal verlaufenden Scharnierbolzen aufweist, der in zumindest einer Konsole des Trommelgehäuses oder eines Querträgers fixiert ist und auf dem eine als Platte ausgebildete Kulisse der Verriegelungseinrichtung verschwenkbar geführt ist, das die Kulisse mit dem Einzugsgehäuse verbunden ist und an einer radial zum Scharnierbolzen verlaufenden Führungsfläche Verriegelungsausnehmungen aufweist, und dass in die Verriegelungsausnehmungen ein als Klinke dienender Verriegelungsbolzen in der zumindest einen Zwischenposition und in der maximalen Öffnungsposition mit einem Abschnitt seiner Umfangsfläche eingreift. An der kurvenartig verlaufenden Führungsfläche wird folglich der Verriegelungsbolzen entlang geführt und greift in den vorgenannten Positionen des Einzugsgehäuses in die jeweilige Verriegelungsausnehmung ein.

Wie weiterhin vorgesehen kann der Verriegelungsbolzen in einem plattenförmig ausgebildeten Halter angeordnet ist, wobei der Halter schwenkbar an der Konsole geführt ist. Der plattenförmige Halter lässt sich mittels eines Betätigungselements gemeinsam mit dem Verriegelungsbolzen soweit an der Konsole verschwenken, dass die Kulisse frei drehbar ist und folglich das Einzugsgehäuse verschwenkt werden kann.

In Weiterbildung der Erfindung soll an der zweiten vertikalen Seitenwand oder dem dieser benachbarten vertikalen Gestellteil eine Schließeinrichtung vorgesehen sein, die über ein horizontal entlang des Trommelgehäuses oder durch eine Aufnahme des Gestellteils verlaufendes Zug- und/oder Druckelement mit der an der ersten vertikalen Seitenwand des Trommelgehäuses oder dem dieser benachbarten vertikalen Gestellteil vorgesehenen Verriegelungseinheit verbunden ist. Von der dem Scharnier gegenüberliegenden Seite können somit sowohl die Verbindung zwischen dem Einzugsgehäuse und dem Trommelgehäuse getrennt als auch eine gezielte Verriegelung des Einzugsgehäuses in den jeweiligen Öffnungspositionen vorgenommen werden. Die die Einrichtung bedienende Person befindet sich dabei zwischen dem linken vorderen Antriebsrad und dem Einzugsgehäuse.

Die Bezugnahme der Patentansprüche auf die Zeichnung durch die Verwendung von Bezugszeichen soll den Schutzumfang der Patentansprüche nicht beschränken.

Zur weiteren Erläuterung der Erfindung wird auf die Zeichnung verwiesen, in der ein Ausführungsbeispiel vereinfacht dargestellt ist. Es zeigen:
- Figur 1: eine Seitenansicht einer als selbstfahrender Feldhäcksler ausgebildeten Erntemaschine ohne Erntevorsatz,
- Figur 2: eine Teilansicht eines Einzugsgehäuses und eines Trommelgehäuses als Draufsicht,
- Figur 3: einen Ausschnitt III in Figur 2, der eine aus einem Scharnier und einer Verriegelungseinrichtung bestehenden Einheit zeigt,
- Figur 4: eine Teilansicht im Bereich einer Trennebene zwischen dem Einzugsgehäuse und dem Trommelgehäuse, wobei einerseits dieser Anordnung die aus dem Scharnier und der Verriegelungseinrichtung bestehende Einheit und andererseits der Anordnung ein Riegelhebel vorgesehen sind, und
- Figur 5: eine perspektivische Darstellung der aus dem Scharnier und der Verriegelungseinrichtung bestehende Einheit.

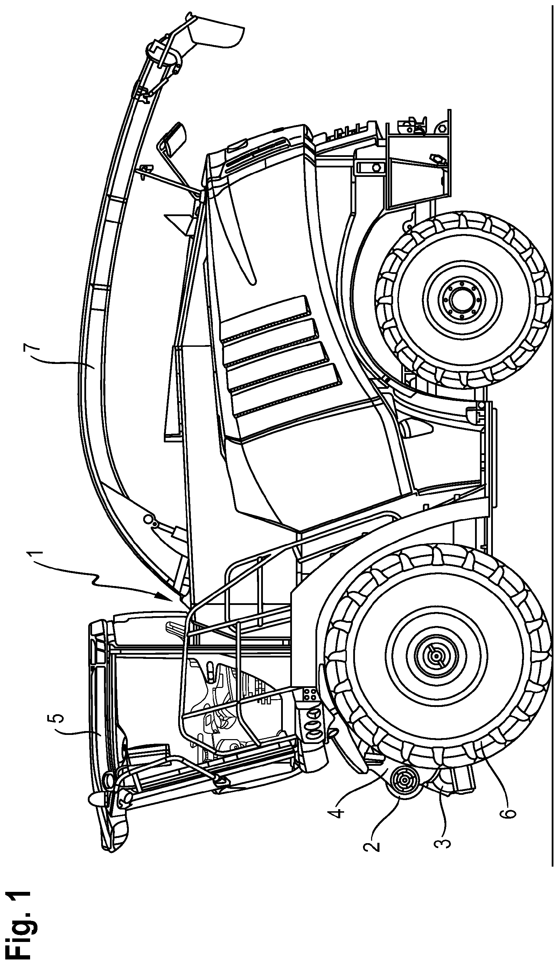

In der Figur 1 ist mit 1 ein selbstfahrender Feldhäcksler bezeichnet, der in seinem frontseitigen Bereich derart gestaltet ist, dass er einen in dieser Figur 1 nicht dargestellten Erntevorsatz aufnehmen kann. Da dieser Erntevorsatz entfernt ist, sind Einzugswalzen 2 und 3 sichtbar, über die das vom Erntevorsatz aufgenommene Erntegut verdichtet und in das Innere des Feldhäckslers 1 gefördert wird. Diese Einzugswalzen 2 und 3 sowie diesen in Förderrichtung des Erntegutes nachgeschaltete Vorpresswalzen, die in der Darstellung nach Figur 1 ebenfalls nicht sichtbar sind, werden dabei von einem Einzugsgehäuse 4 aufgenommen.

An das Einzugsgehäuse 4 ist, wie zuvor angegeben, der Erntevorsatz ankuppelbar. Weiterhin weist der selbstfahrende Feldhäcksler 1 eine Fahrerkabine 5 auf, die oberhalb von nichtlenkbaren vorderen Antriebsrädern angeordnet ist, von denen in der Figur 1 ein linkes Antriebsrad 6 dargestellt ist. Weiterhin weist der selbstfahrende Feldhäcksler 1 einen schwenkbaren Auswurfkrümmer 7 auf, der sich in der Darstellung in einer Transportstellung für eine Straßenfahrt befindet.

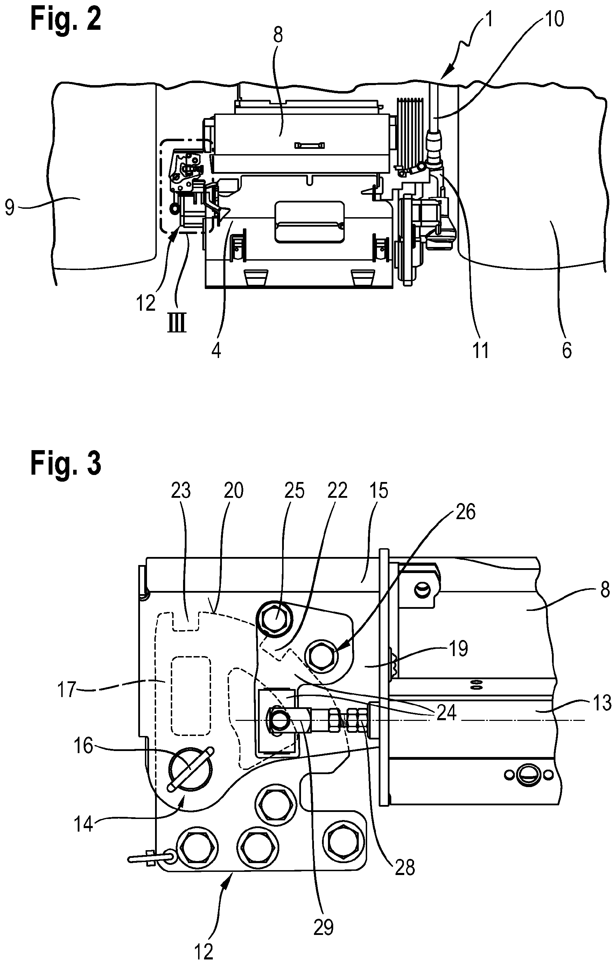

Die Figur 2 zeigt die Lage des Einzugsgehäuses 4 und eines mit diesem verbundenen Trommelgehäuses 8, in welchem eine Häckseltrommel angeordnet ist, zwischen dem linken Antriebsrad 6 und einem rechten Antriebsrad 9. Die Verbindung zwischen dem Einzugshäuse 4 und dem Trommelgehäuse 8 ist derart gestaltet, dass der im Einzugsgehäuse 4 von den Einzugswalzen 2 und 3 sowie nicht näher dargestellten Vorpresswalzen aufbereitete Erntegutstrom ungehindert in das Trommelgehäuse 8 eintritt. Für Reparatur- und Wartungsarbeiten am Häckselaggregat ist das Einzugsgehäuse 4 zumindest teilweise vom Trommelgehäuse 8 zu trennen und wegzuschwenken.

Wie weiterhin aus der Darstellung nach der Figur 2 hervorgeht, ist für den Antrieb der Einzugswalzen 2 und 3 sowie der Vorpresswalzen an einer dem linken Antriebsrad 6 zugewandten Stirnseite des Einzugsgehäuses 4 eine Gelenkwelle 10, die über ein Kuppelelement 11 mit diesem kuppelbar ist, vorgesehen. Zwischen der anderen Stirnseite des Einzugsgehäuses 4 beziehungsweise des Trommelgehäuses 8 und dem rechten Antriebsrad 9 befindet sich eine Einheit 12, die nachfolgend im Zusammenhang mit den Figuren 3, 4 und 5 erläutert wird.

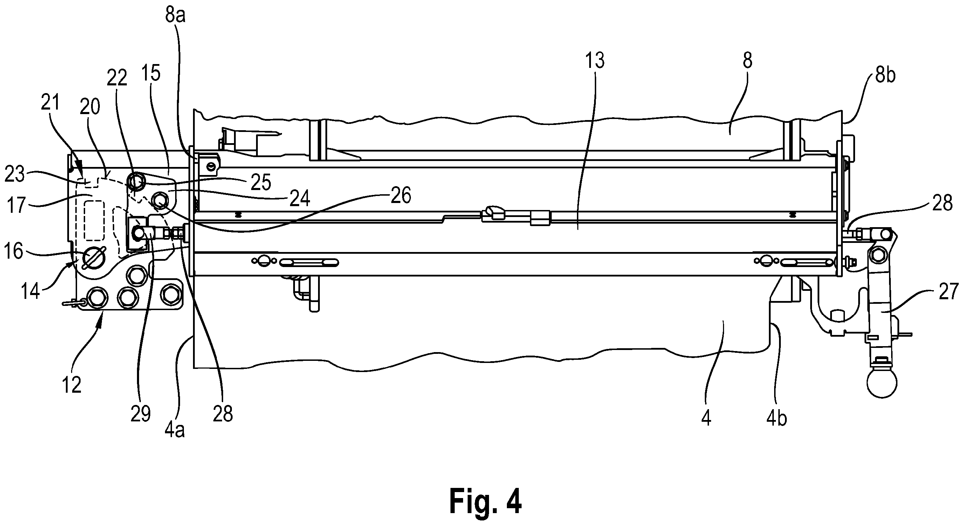

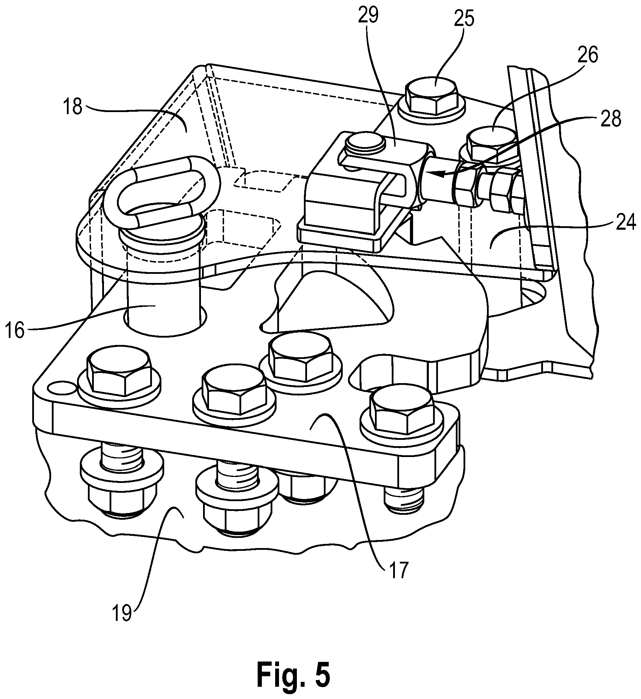

Wie aus den Figuren 3 und 4 hervorgeht, verläuft oberhalb des Trommelgehäuses 8 ein Querträger 13, der mit dem Trommelgehäuse 8 verbunden ist und an seinem einen Ende die in der Draufsicht gezeigte Einheit 12 aufnimmt. Die Einheit 12 weist ein Scharnier 14 auf, das aus einem in einer Konsole 15 fixierten Scharnierbolzen 16 sowie einer als Platte ausgebildeten Kulisse 17 hergestellt ist. Dabei besteht die mit dem Querträger 13 verbundene Konsole 15, wie insbesondere die perspektivische Darstellung nach der Figur 5 verdeutlicht, aus einer oberen Platte 18 und einer unteren Platte 19, die beabstandet zueinander angeordnet sind. Zwischen diesen Platten 18 und 19 befindet sich die Kulisse 17, die am Einzugsgehäuse 4 befestigt ist. Radial zum Scharnierbolzen 16 ist die Kulisse 17 mit einer Führungsfläche 20 versehen, die Bestandteil einer Verriegelungseinrichtung 21 ist.

Zu diesem Zweck sind an der Führungsfläche 20 der Verriegelungseinrichtung 21 zwei Verriegelungsausnehmungen 22 und 23 vorgesehen. Weiterhin ist ein Halter 24 über einen Schwenkbolzen 25 an der Konsole 15 geführt und nimmt einen parallel zum Schwenkbolzen 25 verlaufenden Verriegelungsbolzen 26 auf. Wenn der Verriegelungsbolzen 26 in die Verriegelungsausnehmung 22 eingreift, ist das Einzugsgehäuse 4 um einen Winkel in einem Bereich zwischen etwa 10°bis 20° vorzugsweise etwa 15° gegenüber dem Trommelgehäuse 8 verschwenkt, so dass das Kuppelelement 11 der Gelenkwelle 10 am Einzugsgehäuse 4 entkuppelt werden kann. Greift der Verriegelungsbolzen 26 hingegen in die weitere Verriegelungsausnehmung 23 ein, so befindet sich das Einzugsgehäuse 4 in seiner den Zugang zum Trommelgehäuse 8 maximal öffnenden Position.

Die Figur 4 zeigt, dass das Einzugsgehäuse 4 eine erste vertikale Seitenwand 4a und eine zweite vertikale Seitenwand 4b aufweist. In gleicher Weise ist das Trommelgehäuse 8 mit einer ersten vertikalen Seitenwand 8a und einer zweiten vertikalen Seitenwand 8b versehen. An dem vom Scharnier 13 und der Verriegelungseinrichtung 20 abgewandten Ende des Querträgers 13 ist ein Riegelhebel 27 angeordnet, über den das Einzugsgehäuse 4 gegenüber dem Trommelgehäuse 8 bzw. dem Querträger 13 verriegelbar ist. Von diesem Riegelhebel 27 geht ein durch den Querträger 13 verlaufendes Gestänge 28 aus, das über einen Gabelkopf 29 an dem Halter 24 angreift. Somit kann die Verriegelungseinrichtung 21 über den Riegelhebel 27 betätigt werden und anschließend die sich auf dieser Seite des Einzugsgehäuses 4 befindende Gelenkwelle 10 vom Antrieb lösen oder an diesem befestigen.

### Bezugszeichenliste

- 1: selbstfahrender Feldhäcksler
- 2: obere Einzugswalze
- 3: untere Einzugswalze
- 4: Einzugsgehäuse
- 4a: erste vertikale Seitenwand von 4
- 4b: zweite vertikale Seitenwand von 4
- 5: Fahrerkabine
- 6: linkes Antriebsrad
- 7: Auswurfkrümmer
- 8: Trommelgehäuse
- 8a: erste vertikale Seitenwand von 8
- 8b: zweite vertikale Seitenwand von 8
- 9: rechtes Antriebsrad
- 10: Gelenkwelle
- 11: Kuppelelement
- 12: Einheit
- 13: Querträger
- 14: Scharnier
- 15: Konsole
- 16: Scharnierbolzen
- 17: Kulisse
- 18: obere Platte von 15
- 19: untere Platte von 15
- 20: Führungsfläche von 17
- 21: Verriegelungseinrichtung
- 22: Verriegelungsausnehmung
- 23: Verriegelungsausnehmung
- 24: Halter
- 25: Schwenkbolzen
- 26: Verriegelungsbolzen
- 27: Riegelhebel
- 28: Gestänge
- 29: Gabelkopf

## Patentansprüche

1. Selbstfahrender Feldhäcksler (1) mit einem zumindest teilweise im Bereich zwischen Antriebsrädern (6 und 9) angeordneten Häckselaggregat, das ein Trommelgehäuse (8) und eine in diesem gelagerte Häckseltrommel aufweist, und mit einem dem Häckselaggregat vorgeschalteten Einzugsgehäuse (4), welches jeweils paarweise angeordnete Einzugswalzen (2 und 3) und Vorpresswalzen aufnimmt und an welches ein Erntevorsatz kuppelbar ist, wobei das Einzugsgehäuse (4) für Wartungs- oder Reparaturarbeiten gegenüber dem Trommelgehäuse (8) um eine im Wesentlichen vertikale Schwenkachse in zumindest eine Öffnungsstellung, in der das Innere des Trommelgehäuses (8) zugänglich ist, verschwenkbar ist, wobei an einer ersten vertikalen Seitenwand (8a) des Trommelgehäuses (8) oder einem dieser benachbarten Gestellteil (13) ein die Schwenkachse bildendes mit einer ersten Seitenwand (4a) des Einzugsgehäuses (4) verbundenes Scharnier (14) befestigt ist und wobei in einer Schließposition an einer zweiten vertikalen Seitenwand (8b) des Trommelgehäuses (8) oder einem dieser benachbarten Gestellteil (13) eine zweite Seitenwand (4b) des Einzugsgehäuses (4) festlegbar ist, wobei im Bereich der zweiten Seitenwände (4b, 8b) des Einzugsgehäuses (4) und des Trommelgehäuses (8) zumindest ein Kuppelelement (11) zumindest eines Antriebselements (10) vorgesehen ist, **dadurch gekennzeichnet, dass** am Scharnier (14) eine Rast- oder Verriegelungseinrichtung (21) vorgesehen ist, über die das Einzugsgehäuse (4) in mindestens einer zwischen der Schließposition und einer maximalen Öffnungsposition liegenden Zwischenposition gehalten wird.

2. Selbstfahrender Feldhäcksler (1) nach Patentanspruch 1, **dadurch gekennzeichnet, dass** das Einzugsgehäuse (4) in seiner Zwischenposition um einen Winkel in einem Bereich zwischen etwa 10°bis 20°aus der Schließpo sition heraus verschwenkt ist.

3. Selbstfahrender Feldhäcksler (1) nach Patentanspruch 1, **dadurch gekennzeichnet, dass** die Rast- oder Verriegelungseinrichtung (21) ein durch eine Feder vorgespanntes Rastmittel aufweist, das mit einem Rastgebirge zusammenwirkt.

4. Selbstfahrender Feldhäcksler (1) nach Patentanspruch 1, **dadurch gekennzeichnet, dass** das Scharnier (14) einen im Wesentlichen vertikal verlaufenden Scharnierbolzen (16) aufweist, der in zumindest einer Konsole (15) des Trommelgehäuses (8) oder eines Querträgers (13) fixiert ist und auf dem eine als Platte ausgebildete Kulisse (17) der Verriegelungseinrichtung (21) verschwenkbar geführt ist, das die Kulisse (17) mit dem Einzugsgehäuse (4) verbunden ist und an einer radial zum Scharnierbolzen (16) verlaufenden Führungsfläche (20) Verriegelungsausnehmungen (22 und 23) aufweist, und dass in die Verriegelungsausnehmungen (22 oder 23) ein als Klinke dienender Verriegelungsbolzen (26) in der zumindest einen Zwischenposition und in der maximalen Öffnungsposition mit einem Abschnitt seiner Umfangsfläche eingreift.

5. Selbstfahrender Feldhäcksler (1) nach Patentanspruch 4, **dadurch gekennzeichnet, dass** der Verriegelungsbolzen (26) in einem plattenförmig ausgebildeten Halter (24) angeordnet ist, wobei der Halter (24) schwenkbar an der Konsole (15) geführt ist.

6. Selbstfahrender Feldhäcksler (1) nach Patentanspruch 1, **dadurch gekennzeichnet, dass** an den zweiten vertikalen Seitenwänden (4b und 8b) oder dem diesen benachbarten Gestellteil (13) eine Schließeinrichtung (27) vorgesehen ist, die über ein horizontal entlang des Trommelgehäuses (8) oder durch eine Aufnahme des Gestellteils (13) verlaufendes Zug- und/oder Druckelement (28) mit der an der ersten vertikalen Seitenwand (8a) des Trommelgehäuses (8) oder dem dieser benachbarten Gestellteil (13) vorgesehenen Verriegelungseinrichtung (21) verbunden ist.

## Claims

1. Self-propelled forage harvester (1) with a chopper assembly, arranged at least partially in the area between drive wheels (6 and 9), which has a drum housing (8) and a chopping drum mounted therein, and with an intake housing (4), connected upstream of the chopper assembly, which houses intake rollers (2 and 3) and precompaction rollers in each case arranged in pairs and to which a harvesting header can be coupled, wherein, for maintenance or repair work, the intake housing (4) is pivotable relative to the drum housing (8) about a substantially vertical pivot axis into at least one open position in which the inside of the drum housing (8) is accessible, wherein a hinge (14) joined to a first side wall (4a) of the intake housing (4) and forming the pivot axis is secured to a first vertical side wall (8a) of the drum housing (8) or a frame part (13) neighbouring this and wherein a second side wall (4b) of the intake housing (4) can be fixed in a closed position on a second vertical side wall (8b) of the drum housing (8) or a frame part (13) neighbouring this, wherein at least one coupling element (11) of at least one drive element (10) is provided in the area of the second side walls (4b, 8b) of the intake housing (4) and of the drum housing (8), **characterized in that**, on the hinge (14), a catch or locking device (21) is provided, via which the intake housing (4) is held in at least one intermediate position lying between the closed position and a maximum open position.

2. Self-propelled forage harvester (1) according to claim 1, **characterized in that** in its intermediate position the intake housing (4) is pivoted out of the closed position by an angle in a range between approximately 10° and 20°.

3. Self-propelled forage harvester (1) according to claim 1, **characterized in that** the catch or locking device (21) has a catch means, pretensioned by a spring, which interacts with a catch formation.

4. Self-propelled forage harvester (1) according to claim 1, **characterized in that** the hinge (14) has a substantially vertically running hinge pin (16), which is fixed in at least one bracket (15) of the drum housing (8) or of a cross beam (13) and on which a link (17), formed as a plate, of the locking device (21) is guided pivotably, **in that** the link (17) is joined to the intake housing (4) and has locking recesses (22 and 23) on a guide surface (20) running radially relative to the hinge pin (16), and **in that** a locking bolt (26) acting as a latch engages, with a section of its circumferential surface, in the locking recesses (22 or 23) in the at least one intermediate position and in the maximum open position.

5. Self-propelled forage harvester (1) according to claim 4, **characterized in that** the locking bolt (26) is arranged in a plate-shaped holder (24), wherein the holder (24) is guided pivotably against the bracket (15).

6. Self-propelled forage harvester (1) according to claim 1, **characterized in that**, on the second vertical side walls (4b and 8b) or the frame part (13) neighbouring these, a closing device (27) is provided, which is joined to the locking device (21) provided on the first vertical side wall (8a) of the drum housing (8) or the frame part (13) neighbouring this via a pulling and/or pushing element (28) running horizontally along the drum housing (8) or through a slot of the frame part (13).

## Revendications

1. Ensileuse automotrice (1) comprenant un organe hacheur qui est disposé au moins en partie dans la zone située entre des roues motrices (6 et 9) et qui comporte un carter de rotor (8) et un rotor de hachage monté dans celui-ci, et comprenant un carter d'alimentation (4) qui est disposé en amont de l'organe hacheur et qui abrite des rouleaux d'alimentation (2 et 3) et des rouleaux de précompression disposés respectivement par paires et auquel peut être couplé un outil frontal, le carter d'alimentation (4) pouvant pivoter, pour des travaux d'entretien ou de réparation, par rapport au carter de rotor (8) autour d'un axe de pivotement sensiblement vertical dans au moins une position ouverte dans laquelle l'intérieur du carter de rotor (8) est accessible, sur une première paroi latérale verticale (8a) du carter de rotor (8) ou sur une partie de bâti (13) voisine de celle-ci étant fixée une charnière (14) formant l'axe de pivotement et reliée à une première paroi latérale (4a) du carter d'alimentation (4), et, dans une position fermée, une seconde paroi latérale (4b) du carter d'alimentation (4) pouvant être immobilisée contre une seconde paroi latérale verticale (8b) du carter de rotor (8) ou contre une partie de bâti (13) voisine de celle-ci, dans la zone des deux parois latérales (4b, 8b) du carter d'alimentation (4) et du carter de rotor (8) étant prévu au moins un élément d'accouplement (11) au moins d'un élément d'entraînement (10), **caractérisée en ce que** sur la charnière (14) est prévu un équipement de crantage ou de verrouillage (21) par l'intermédiaire duquel le carter d'alimentation (4) est maintenu dans au moins une position intermédiaire entre la position fermée et une position ouverte maximale.

2. Ensileuse automotrice (1) selon la revendication 1, **caractérisée en ce que**, dans sa position intermédiaire, le carter d'alimentation (4) est pivoté hors de la position fermée selon un angle situé dans une plage comprise entre 10° à 20°.

3. Ensileuse automotrice (1) selon la revendication 1, **caractérisée en ce que** l'équipement de crantage ou de verrouillage (21) comporte un moyen de crantage qui est précontraint par un ressort et qui coopère avec une rampe de crantage.

4. Ensileuse automotrice (1) selon la revendication 1, **caractérisée en ce que** la charnière (14) comporte une goupille de charnière (16) qui s'étend sensiblement verticalement et qui est immobilisée dans au moins une console (15) du carter de rotor (8) ou d'une traverse (13) et sur laquelle une coulisse (17) de l'équipement de verrouillage (21) est guidée à pivotement, **en ce que** la coulisse (17) est reliée au carter d'alimentation (4) et comporte des évidements de verrouillage (22 et 23) sur une surface de guidage (20) s'étendant radialement à la goupille de charnière (16), et **en ce que**, dans la au moins une position intermédiaire et dans la position ouverte maximale, une goupille de verrouillage (26) servant de cliquet s'engage avec une portion de sa surface périphérique dans les évidements de verrouillage (22 ou 23).

5. Ensileuse automotrice (1) selon la revendication 4, **caractérisée en ce que** la goupille de verrouillage (26) est disposée dans un support (24) conformé en plaque, le support (24) étant guidé à pivotement sur la console (15).

6. Ensileuse automotrice (1) selon la revendication 1, **caractérisée en ce que** sur les secondes parois latérales verticales (4b et 8b) ou sur la partie de bâti (13) voisine de celles-ci est prévu un équipement de fermeture (27) qui, par l'intermédiaire d'un élément de traction et/ou de pression (28) s'étendant horizontalement le long du carter de rotor (8) ou à travers un logement de la partie de bâti (13), est relié à l'équipement de verrouillage (21) prévu sur la première paroi latérale verticale (8a) du carter de rotor (8) ou sur la partie de bâti (13) voisine de celle-ci.
